# EUROPEAN PATENT SPECIFICATION

(11) **EP 2 441 990 B1**
(45) Date of publication and mention of the grant of the patent: **16.03.2016**
(21) Application number: 11185084.8
(22) Date of filing: 13.10.2011
(51) Int. Cl.: F16K 3/22, F16K 43/00, F24D 19/10, F16K 5/06

(54) **A fluid regulating valve for plants, in particular conditioning plants**
Flüssigkeitsventil, insbesonder für Klimaanlagen
Vanne de règulation en particulier pour un dispositif de conditionnement

(30) Priority: 14.10.2010 IT MI20101881
(43) Date of publication of application: 18.04.2012
(73) Proprietor: FIMCIM S.P.A., 20121 Milano (MI) (IT)
(72) Inventor: Cimberio, Roberto, 20121 Milano (IT); Guidetti, Tiziano, 20121 Milano (IT)
(74) Representative: Sutto, Luca

(56) References cited:
- EP-A1- 2 226 536
- EP-A2- 1 116 921
- WO-A1-99/60291
- US-A- 5 954 088

## Description

### FIELD OF THE INVENTION

The present invention relates to a fluid regulating valve for conditioning plants. The regulating valve of the invention enables controlling a flow internally of a circuit. The valve has a broad field of use, as it contemporaneously combines a high degree of precision and rapidity on the control of the fluid; purely by way of example, a typical application can be made in conditioning plants where an appropriate management of the flow crossing the plant is required so as to keep account of the frequent variations in flow rates to the various users.

### PRIOR ART

As is known, flow regulating valves exist on the market which enable regulating a flow rate, pressure or pressure differential between two distinct points of a plant in which the valve is installed.

In a first example, illustrated in application US2007/0125432, use is made of a regulating valve with an inlet, an outlet and a membrane for receiving pressure signals and regulating a flow between the inlet and the outlet. The membrane works in opposition to a spring and at least partially checks the flow between the inlet and the outlet, thus determining a pressure difference between inlet and outlet of the valve. The position of the membrane is linked to the pressure of the fluid crossing the valve and to a further pressure signal coming from another point of the plant. The pressure of the fluids in contact with the membrane determines the position of the membrane, which increases or reduces the passage of fluid between inlet and outlet.

A second example, illustrated in application WO2010/074921 shows a flow control or load loss valve; the valve is provided with a control system for setting a reference value of the desired load loss or the desired flow rate value and for automatically regulating the position of an obturator.

A third example, illustrated in Korean application KR100835707, includes use of a flow regulating valve. The valve comprises an inlet opening, an outlet opening and an obturator. On the basis of the difference of pressure between a predetermined point of the plant and the point in which the valve is installed, the position of the obturator is modulated in opposition to the action of a spring directly connected to the obturator. The valve is provided with a system for regulating the spring preload; by regulating the preload it is possible to control the pressure difference between the point at which the pressures are read.

EP 2 226 536 and US 2003/0192 595 show further examples of regulating valves for plants.

### SUMMARY OF THE INVENTION

A first aim of the present invention is to provide a valve enabling setting a series of values relating to physical parameters of the fluid circulating in the plant and which is able to regulate the flow of fluid on the basis of said settings.

A further aim of the invention is to provide a valve that is sensitive to pressure or flow variations internally of the circuit in which the valve is predisposed, enabling an automatic control of the fluid flow in at least a branch of the plant. A further aim of the invention is to provide a valve able to increase the sensitivity of the flow control.

A further aim of the invention is to provide a valve having a long operating path in which the sensitivity to flow variation is not compromised.

One or more of the above-mentioned aims is substantially attained by a valve according to one or more of the appended claims.

Further aspects of the invention are described below.

A 1st aspect includes a regulating valve for fluid plants, in particular conditioning plants, comprising: at least a valve body exhibiting at least an inlet, at least an outlet and at least a channel which sets the inlet in fluid communication with the outlet, at least a check element of fluid operating in the channel and forming the regulating organ together with the valve body, the fluid check element 42 defining, in cooperation with the valve body 36, a passage opening 43 for fluid between the inlet 37 and the outlet 38 of a variable size according to positions assumed by the check element 42 in relation to the valve body 36 along a predetermined operating path; and at least a control device 25 configured to:
➢ receive in input at least a first signal relating to an intensity of a physical parameter of the fluid circulating in the first section 22 of the plant and a second signal relating to the intensity of a physical parameter of a fluid circulating in the second section 23 of the plant,
➢ generate the output signal as a function of the first signal and the second signal, said output signal being used to control the angular position of the check element 42.

In a 2nd aspect in accordance with the 1st aspect the check element 42 is configured such as to rotate with respect to a rotation axis 44 which extends transversally with respect to a prevalent axis of development 55 of said channel 39.

In a 3rd aspect in accordance with the 2nd aspect the control device 25 is configured such as to move the check element among a plurality of distinct operating positions which are angularly offset to one another. The angular positions are separate and at each distinct angular position the control device is configured such as to evaluate, on the basis of the output signal, whether an additional angular displacement is required or not. An angular step is defined between an operating position and a next angular operating position. In practice a step is understood to mean the angular distance between the distinct positions of the check element and is configured such as to perform the said evaluation. In a 4th aspect in accordance with the previous aspect, the angular step, at least for a predetermined tract of the operative path, is less than 1° (one degree).

In a 5th aspect in accordance with any one of the preceding 3rd or 4th aspects, the angular step, at least for the predetermined tract of the operative path, is less than 0.5° (half a degree).

In a 6th aspect in accordance with any of the above aspects from the 3rd to the 5th, the angular step, at least over a predetermined tract of the operating path, is less than 1°, optionally less than 0.5%; and/or wherein the angular step is not constant over the operating path, optionally wherein the tract in which the step is not constant comprises at least 10% of the operating path.

In a 7th aspect in accordance with any of the above aspects from the third to the sixth, where the angular step reduces progressively, optionally exponentially, for a stretch that includes at least 10% of the operating path.

In an 8th aspect according to any of the above aspects from 3rd to 7th, the size of the angular step is a function of the intensity of the physical parameter of the fluid circulating in the first section 22 and the intensity of the physical parameter of the fluid circulating in a second section 23 of the plant. In practice, the control device regulates the angular step as a function of the measurements, for example of pressure, in the two sections. For example the control device is configured such as to reduce the angular step progressively on reduction of a difference between a reference value and a real value given by a difference of intensity of the physical parameter of the fluid circulating in the first section and the intensity of the same physical parameter of the fluid circulating in a second section.

In a 9th aspect in accordance with any of the above aspects from 3rd to 8th, the tract of the operating path in which the step is not constant and/or is less than 1° comprises an initial tract 45 of the operating path, the initial tract being in turn comprised between an initial position 46 of complete closure of the passage opening 43 and an intermediate position 47 in which the passage opening 43 is open to not more than 40%.

In a 10th aspect in accordance with any of the above aspects from 3rd to 9th, the tract of the operating path in which the step is not constant and/or is less than 1° comprises an initial tract of the operating path, the final tract being in turn comprised between a final position of complete opening of the passage and an intermediate position 47 in which the passage opening is open to not more than 30%.

In a 11th aspect in accordance with any of the above aspects from 3rd to 10th, the tract of the operating path in which the step is not constant and/or is less than 1° comprises a final tract 48 of the operating path, the final tract being in turn comprised between a final position 49 of complete opening of the passage opening 43 and an intermediate position in which the passage opening 43 is open to not more than 50%.

In a 12th aspect in accordance with any of the above aspects from 3rd to 11th, the tract of the operating path in which the step is not constant and/or is less than 1° comprises a final tract 48 of the operating path, the final tract being in turn comprised between an final position 49 of complete closure of the passage opening 43 and an intermediate position in which the passage opening 43 is open to not more than 40%.

In a 13th aspect in accordance with any of the above aspects, the check element 42 has an external surface rotating about said axis 44 which exhibits a substantially spherical or cylindrical conformation.

In a 14th aspect in accordance with any of the above aspects, the valve body 36 exhibits at least a wall 36a located transversally of the prevalent development axis 50 of the channel 39 and respectively exhibiting a passage opening, said wall 36a being arranged upstream and/or downstream of the check element 42 such as to define the shape of that passage opening 43. In practice, the wall is a shaped diaphragm and in cooperation with the opening of the check element defines the shape of the passage opening.

In a 15th aspect in accordance with any one of the preceding aspects, the passage opening 43 is conformed such that following a movement of the check element 42 over said initial and/or a final tract 45, 48 of said operating path, the incremental ratio between the percentage variation of the area of the passage opening 43 and the percentage displacement of the check element 42 exhibits an absolute value comprised between 0 and 4,
wherein the percentage variation of the area of the passage opening 43 comprises the ratio between the variation of the passage area following a displacement of the check element 42 and a reference area, and wherein said percentage displacement comprises the ratio between the displacement of the check element 42 and the operating path.

In a 16th aspect in accordance with any one of the preceding aspects, the passage opening 43 is shaped such that following a movement of the check element 42 over said initial and/or a final tract 45, 48 of the operating path, the incremental ratio between the percentage variation of the area of the passage opening 43 and the percentage displacement of the check element exhibits an absolute value comprised between 0 and 2.5.

In a 17th aspect in accordance with any one of the preceding aspects, the passage opening 43 is shaped such that following a movement of the check element 42 over an initial and/or a final tract 45, 48 of the operating path, the incremental ratio between the percentage variation of the area of the passage opening and the percentage displacement of the check element 42 exhibits an absolute value comprised between 0 and 1.5.

In a 18th aspect in accordance with any one of the preceding aspects from 15th to 17th, the incremental ratio between the percentage variation of the area of the passage opening 43 and the percentage displacement of the check element 42, over the initial tract comprising not more than 30% of the operating path, exhibits an absolute value comprised between 0 and 4.

In a 19th aspect in accordance with any one of the preceding aspects from 15th to 18th the incremental ratio between the percentage variation of the area of the passage opening 43 and the percentage displacement of the check element 42, over the initial tract comprising not more than 30% of the operating path, exhibits an absolute value comprised between 0 and 2.5.

In a 20th aspect in accordance with any one of the preceding aspects from 15th to 19th the incremental ratio between the percentage variation of the area of the passage opening 43 and the percentage displacement of the check element 42, over the final tract 48 comprising not more than 30% of the operating path, exhibits an absolute value comprised between 0 and 4.

In a 21st aspect in accordance with any of the preceding aspects from 15th to 20th the incremental ratio between the percentage variation of the area of the passage opening 43 and the percentage displacement of the check element 42, over the final tract 48 comprising not more than 40% of the operating path, exhibits an absolute value comprised between 0 and 2.5.

In a 22nd aspect in accordance with any of the preceding aspects from 15th to 21st the incremental ratio between percentage variation of the area of the passage opening 43 and the percentage displacement of the check element 42 exhibits an absolute value which is substantially constant over an intermediate tract 47 of the operating path comprised between the initial tract and the final tract, and wherein the intermediate tract comprises between 20% and 40% of the operating path.

In a 23rd aspect in accordance with any of the preceding aspects said first and second signal are related to the intensity of the fluid pressure in said first and second section 22, 23 of the plant.

In a 24th aspect in accordance with any one of the preceding aspects generating an output signal comprises determining a control differential signal comprising a difference or a ratio between the intensity of the first signal and the second signal.

In a 25th aspect in accordance with any one of the preceding aspects, generating the output signal comprises determining a control differential signal comprising a difference or a ratio between the intensity of the first signal and the second signal, wherein the control differential signal comprises the difference or ratio between the intensity of the fluid pressure in said first section 22 and the intensity of the fluid pressure in the second section 23, optionally wherein the control device 25 comprises a pressure differential gauge 55 which receives in input the first signal and the second signal and generates in output the control differential signal.

In a 26th aspect in accordance with any one of the preceding aspects, the control device 25 is configured to:
enable setting at least a reference value,
compare the reference value with the value of the control differential signal, generate the output signal as a function of the comparison.

In a 27th aspect in accordance with any one of the preceding aspects, the control device 25 comprises an actuator 56, for example an electrical actuator, acting on the check element 42, said actuator 56 enabling displacement of the check element 42 along the operating path.

In a 28th aspect in accordance with the preceding aspect, the control device 25 is connected with said actuator 56, the control device 25 further being configured such as to command a movement of the check element 42 as a function of the output signal and to position the check element 42 according to the plurality of positions along the operating path.

In a 29th aspect in accordance with any one of the preceding aspects 27th or 28th, the control device controls the size of the angular step according to which the actuator moves the check element in accordance with the value of the control differential signal and a reference value, optionally wherein the control device controls the size of the angular step according to which the actuator moves the check element in accordance with the difference between the control differential signal and the reference value.

In a 30th aspect in accordance with any one of the preceding aspects, said regulating valve 1 comprises acoustic signalling means 59 and/or optical signalling means 60, said acoustic and/or the optical signalling means 59, 60 being connected to the control device 25 which is configured such as to command said signalling means to provide:
an optical and/or acoustic representation of an instant value of the output signal, and/or
an optical and/or acoustic representation of displacement of an instant value of the output signal with respect to a reference value.

In a 31st aspect in accordance with any one of the preceding aspects, the control device 25 is configured to control a movement of the check element 42 thereby enabling a reduction in the difference between the reference value and the value of the control differential signal.

In a 32nd aspect in accordance with any one of the preceding aspects, said control device 25 includes setting means 57, said setting means 57 being connected to the control device 25, the control device being configured such as to enable a setting of a predetermined number of control parameters that define the working conditions of the valve.

In a 33rd aspect in accordance with any one of the preceding aspects, said control parameters comprising at least a parameter selected from the group having:
a first control parameter relating to a type of movement of the check element,
a second control parameter relating to a maximum excursion of the values of the first signal and the second signal or of the value of the difference between the first signal and the second signal,
a third control parameter relating to the type of function connecting the output signal and the first signal and the second signal,
a fourth control parameter relating to a velocity of convergence between the real value and the reference value.

In 34th aspect in accordance with preceding aspect 33rd, said second control parameter comprises bottom scale values of the pressure differential gauge 55. In a 35th aspect in accordance preceding aspects 33rd or 34th, in relation to the third parameter, said function comprises a link of a proportional or integral or derivate type, or a combination thereof.

In a 36th aspect in accordance with the 33rd or 34th or 35th aspects said fourth control parameter specifies a convergence time defined as a time transitory in which the value of the control differential signal converges to the reference value.

In a 37th aspect in accordance with 33rd or 34th, 35th or 36th aspects said setting means 57 enable memorisation of a predetermined number of configurations relating to values of the control parameters which are useful for managing the control device 25, optionally wherein the setting means 57 comprise micro switches.

In a 38th aspect in accordance with any one of the preceding aspects, said regulating valve 35 further comprises a temperature sensor positioned on the valve body 36, the temperature sensor enabling detection of the temperature at the second section 23.

In a 39th aspect in accordance with any one of the preceding aspects, said control device 25 further comprises input means 37, said input means 37 enabling setting at least a reference value, optionally enabling setting a reference pressure differential between the first and the second section 22, 23.

In a 40th aspect in accordance with any one of the preceding aspects said control device 25 comprises a memory and is configured such as to enable memorising a plurality of predetermined reference values and for enabling selection of at least one of those values on the part of a user.

In a 41st aspect in accordance with one of the preceding aspects said check element 42 has a lateral surface of rotation of cylindrical or spherical shape. In a 42nd aspect in accordance with any of the one of the preceding aspects said passage opening 43 comprises a frontal shaping 51 exhibiting two substantially symmetrical parts wherein each of the parts exhibits a first portion shaped 52 as an arc of a circle, a second portion shaped 53 as an arc of a circle having a smaller radius than the arc of said first portion 52, a connecting inflection 54 which connects said first portion 52 with the second portion 53.

In a 43rd aspect in accordance with any one of the preceding aspects said passage opening 43 comprises a longitudinal shaping 61, relating to a longitudinal section with respect to the prevalent development axis 50 of the channel 39, exhibiting a progressively growing section from said inlet 37 to said outlet 38 of the valve body 36.

In a 44th aspect in accordance with any one of the preceding aspects wherein said control device is configured such as to receive the control parameters and, depending on the value thereof, adjust the rotation direction of the check element 42 according to said axis 44 which extends transversally to the axis of the prevalent development axis 50.

In a 45th aspect in accordance with any with any one of the preceding aspects said first section 22 is defined at the valve body 36, said regulating valve 36 comprising a passage 62 which places said channel 39 in fluid communication with the differential pressure gauge 55.

In a 46th aspect in accordance with any with any one of the preceding aspects said check element 42 operating in said channel 39 of the valve body 36 is configured such as to rotate according to a movement angle with respect to a rotation axis 44 which extends transversally with respect to a prevalent development axis 50 of said channel 39, optionally in which said check element 42 exhibits a lateral rotation surface having a cylindrical or spherical conformation.

In a 47th aspect in accordance with the preceding aspect the incremental ratio between the percentage variation of the area of the passage opening 43 and the percentage displacement of the check element 42, for the initial tract comprised between 20 % and 30% of the operating path, falls within a range of between 0 and 1.5.

In a 48th aspect according to any of aspects 46th or 47th, the incremental ratio between the percentage variation of the area of the passage opening 43 and the percentage displacement of the check element 42, for the final tract comprised between 20 % and 30% of the operating path, falls within a range of between 0 and 1.5.

A 49th aspect relates to a fluid distribution plant to a plurality of users, in which the plant uses one or more of the valves according to any one of aspects 1 to 48th.

A 50th aspect relates to a conditioning plant 1 comprising: at least a general inlet 2, at least a general outlet 3, a circuit 4 which sets the general inlet 2 in fluid communication with the general outlet 3, a plurality of users 5 arranged on the circuit 4, at least a balancing system 20 of the flow acting on said circuit 4, said balancing system 20 comprising:
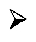 at least a sensor 21 for detecting at least a real value depending on a difference of intensity between a first section 22 upstream of the users and a second section 23 downstream of the users 5, of at least a physical parameter of the fluid,
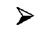 at least a flow regulating organ 24,
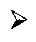 at least a control device 25 connected to the sensor 21, acting on the flow regulating organ 24 and configured for enabling memorisation of at least a reference value of a same physical parameter of the fluid, comparing the reference value with the real value, commanding the regulating organ 24 via an output signal in order to regulate the fluid internally of the circuit such as to maintain the real value substantially aligned with the reference value, or such as to reduce a difference between real value and reference value.

In a 51st aspect according to the 50th aspect, the plant comprises a first detecting line 26 which places a first point 27 of the circuit 4 situated upstream of each user 5 in fluid communication with the sensor 21 of the balancing system 20, and a second detection line 28 which sets a second point 29 of the circuit 4 situated downstream of each user 5 in fluid communication with the sensor 21 of the balancing system 6.

In a 52nd aspect according to aspect 51st, said second point 29 is situated substantially on said regulating organ 24, said regulating organ 24 being situated downstream of each user 5, directly connected on the circuit 4 and in fluid communication with the sensor 21.

In a 53rd aspect according to aspects 50th, or 51st, or 52nd the sensor 21 is a differential sensor, which enables detecting the intensity difference between upstream and downstream of the users 5 of the physical parameter of the fluid, and wherein said sensor 21 detects a difference between a first real value relative to the intensity of the physical parameter at the first point 27 of the circuit 4, and a second real value relative to the intensity of the physical parameter relative to the second point 29 of the circuit 4.

In a 54th aspect according to aspects 50th, or 51st, or 52nd said sensor 21 comprises a first sensor 30 which is in fluid connection with the first detecting line 26 and enables detecting the intensity of the physical parameter at the first point 27 of the circuit 4, and a second sensor 31 which is in fluid connection with the second detecting line 28 and enables detecting the intensity of the physical parameter at the second point 29 of the circuit 4.

In a 55th aspect according to any of the preceding aspects from 50th to 54th, each user 4 comprises a respective delivery channel 6 emerging from the circuit 4, a respective return channel 7 in fluid connection with the delivery channel 6 and arranged such as to return fluid into the circuit 4, at least a user device hydraulically interposed between the delivery channel and the return channel 7. In a 56th aspect according to any of the above aspects from 50th to 55th, each user 5 comprises a respective delivery channel 6 emerging from the circuit 4, a respective return channel 7 in fluid connection with the delivery channel 6 and arranged such as to return fluid into the circuit 4, at least a user device hydraulically interposed between the delivery channel 6 and the return channel 7 and wherein each user 5 exhibits at least a respective closing organ 24, partial or total, arranged either on the delivery channel 6 or on the return channel 7.

In a 57th aspect according to any one of the preceding aspects 55th or 56th the plant comprises at least a delivery manifold 10 arranged upstream of the users 5, at least a return manifold 11 arranged downstream of the users 5, the delivery manifold 10 and the return manifold 11 being respectively connected to the general inlet 2 for the distribution of the fluid to the users 5 and to the general outlet 3 for collecting the fluid in outlet from the users 5.

In a 58th aspect according to the preceding aspect, the regulating organ 24 is engaged to a line 32 interposed between an outlet of the return manifold 11 and the general outlet 3.

In a 59th aspect according to any of the above aspects from 50th to 57th, regulating organ 24 and the control device 25 are part of a regulating valve 35 operating downstream of the users 5, wherein the regulating valve 35.

In a 60th aspect according to preceding aspect 59th said regulating valve has the characteristics of any one of the aspects from the first to the forty-eighth.

### BRIEF DESCRIPTION OF THE DRAWINGS

Some embodiments and some aspects of the invention will be described in the following with reference to the accompanying figures of the drawings, provided by way of non-limiting example, in which:

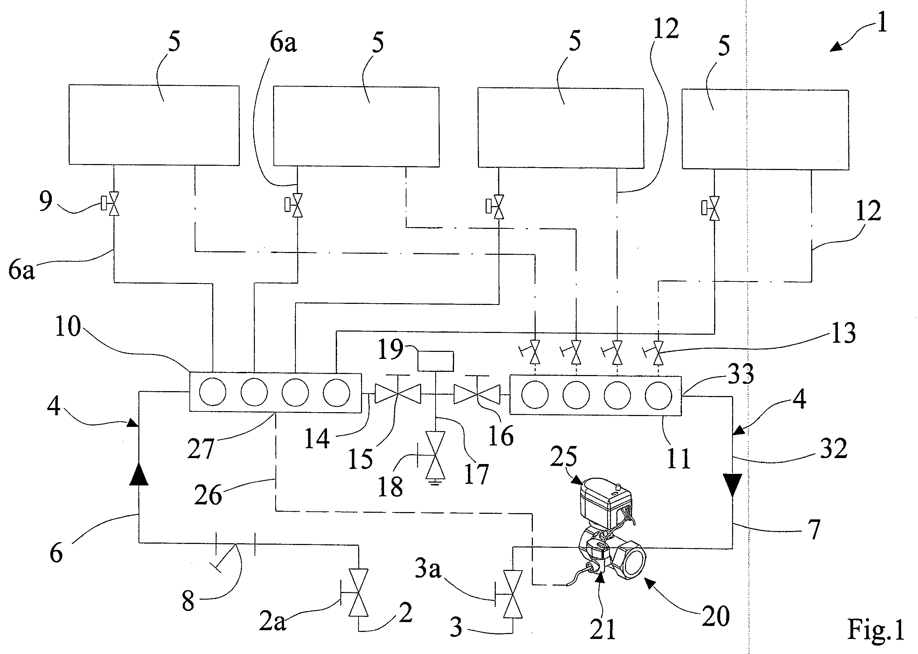

Figure 1 illustrates a first configuration of a conditioning plant, which is not part of the invention

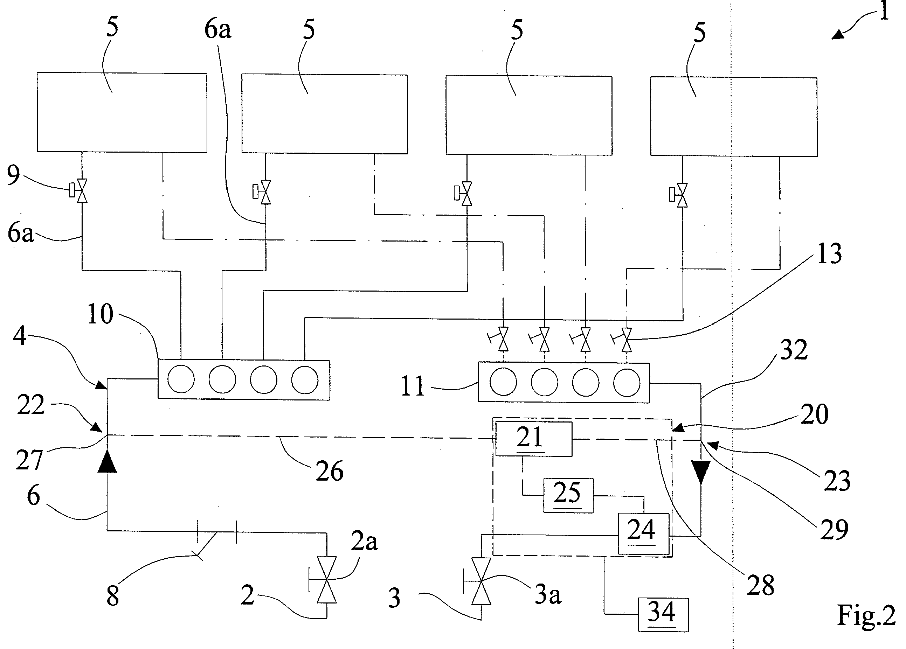

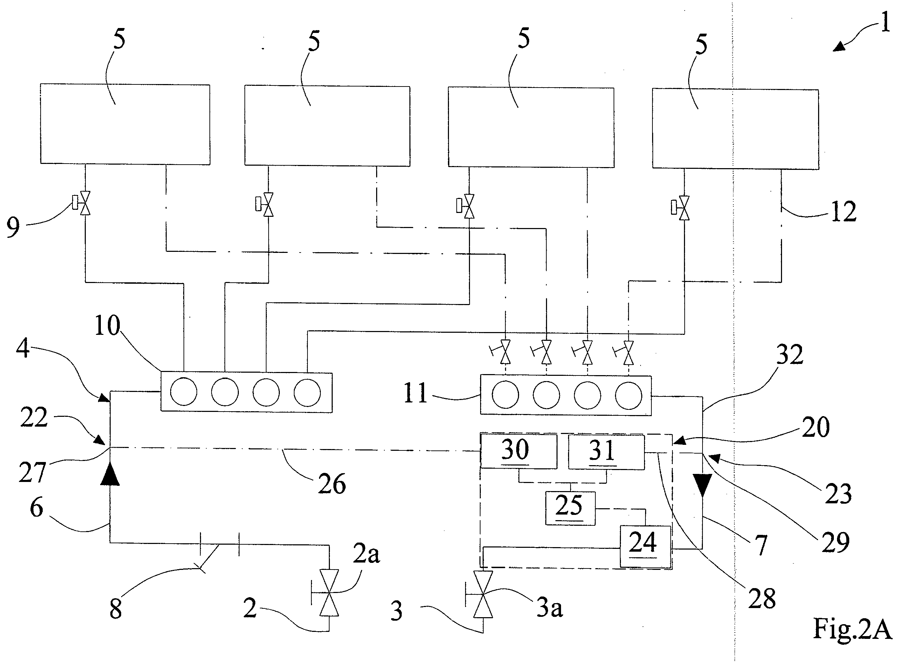

Figure 2 illustrates a second configuration of a conditioning plant, which is not part of the invention
Figure 2a illustrates a third configuration of a conditioning plant, which is not part of the invention
Figure 3 is a perspective view of a valve used in the plants of figures 1-2a;
Figure 4 is a front view of the regulating valve of figure 3 in a first use condition;

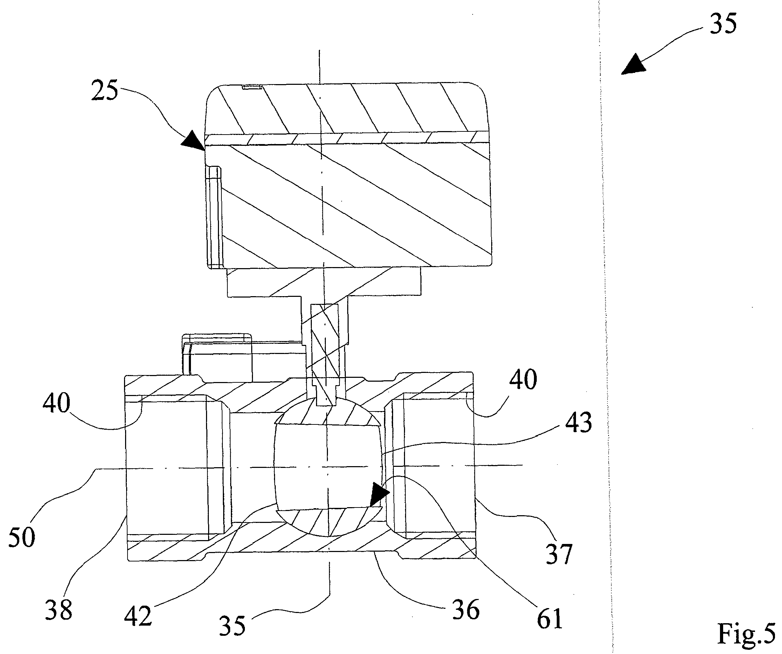

Figure 5 is a section view of the regulating valve of figure 3;
Figure 6 is a front view of the regulating valve of figure 3 in a second use condition;
Figure 7 is a front view of the regulating valve of figure 3 in a third use condition;

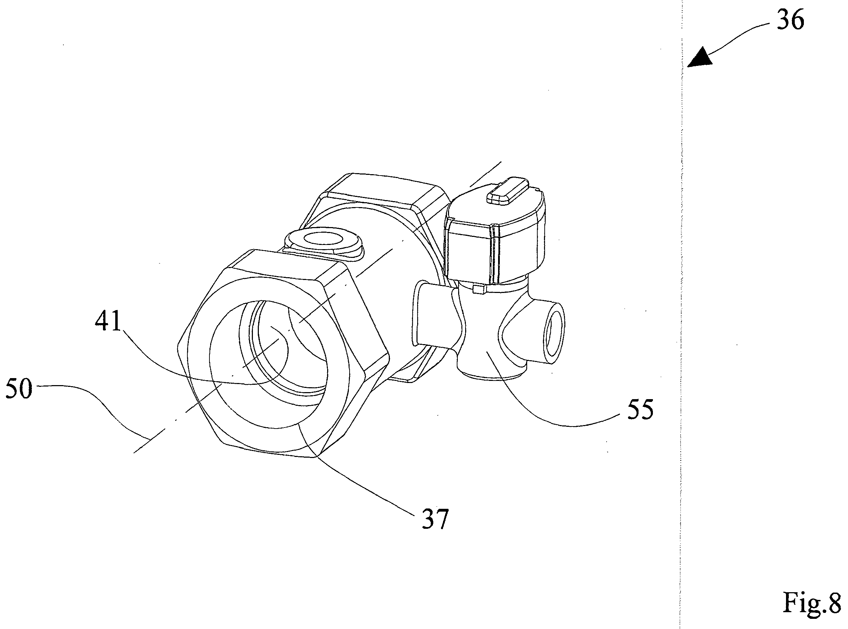

Figure 8 is a perspective view of the valve body of the valve of figure 3;

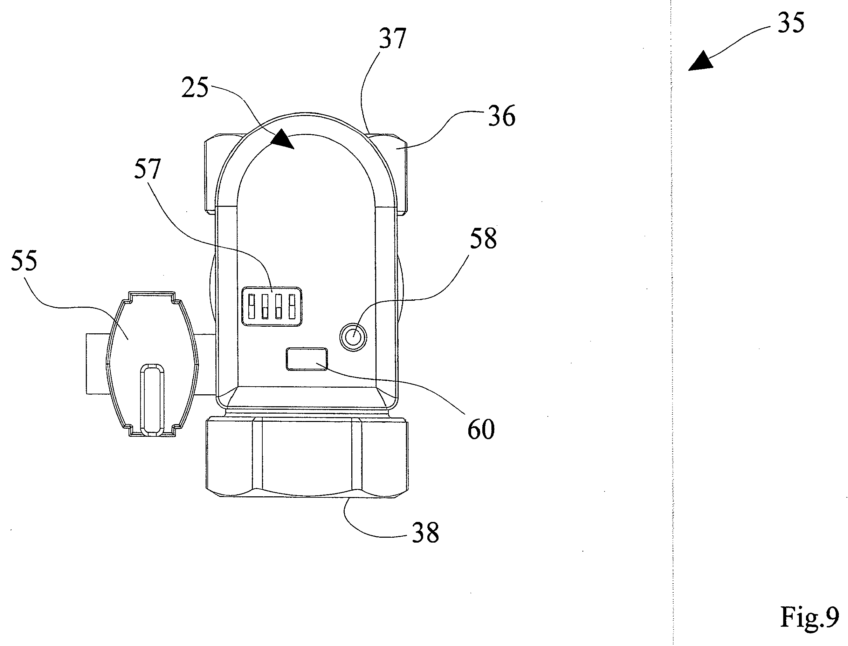

Figure 9 is a view from above of an alternative embodiment of a regulating valve used in the plant of figure 1;
Figure 10 is a front view of the valve of figure 9;

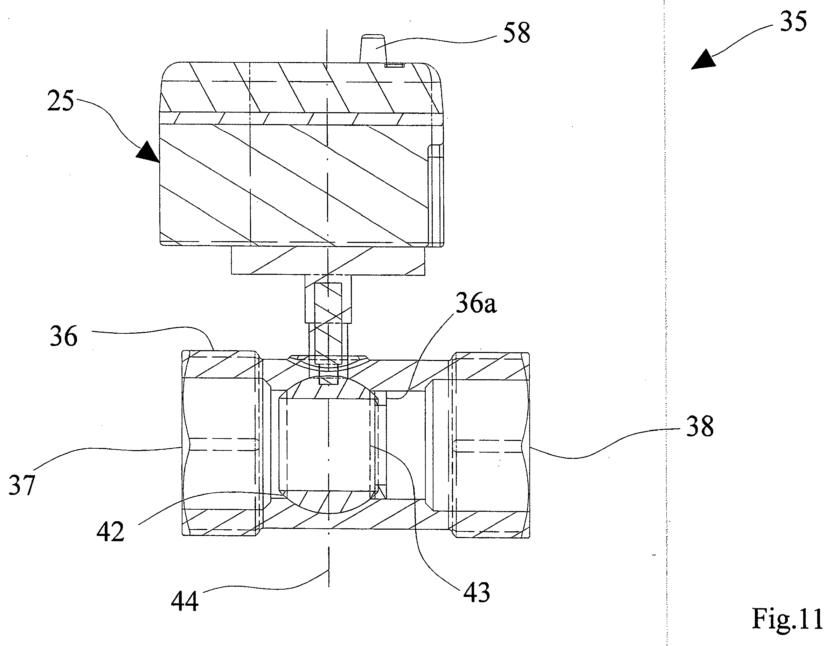

Figure 11 is a section along line XI-XI of figure 10; and
Figure 12 is a comparative diagram relating to the characteristics of two valves that relates the percentage area of the passage opening with the percentage displacement of the check element.

### DETAILED DESCRIPTION

With reference to the accompanying figures of the drawings, 1 denotes in its entirety a conditioning plant comprising a general inlet 2, a general outlet 3, a circuit placing the general inlet in fluid communication with the general outlet 3. Both the general inlet and the general outlet avail of an inlet valve 2a and an outlet valve 3a, for example of a sphere or shutter type, which regulate the general flow internally of the circuit 4.

The circuit supplies a fixed number of user units 5 (herein indicated as users), for example, each comprising one or more heat exchangers and related groups of ventilation (fan coil), which are arranged at or near areas to be conditioned. Heat exchange takes place inside the users 5, enabled by the fluid supply from the general inlet 2.

The circuit exhibits at least two main channels: a delivery channel 6, for sending the fluid to the users, and a return channel 7 in connection with the delivery channel 6 and arranged such as to receive the fluid downstream of the users. The users 5 are hydraulically interposed between the delivery channel 6 and the return channel 7. Before being distributed to the various utilities the fluid is intercepted by a filter 8 which prevents impurities from reaching the users.

The delivery channel 6 and the return channel 7 are respectively connected to a delivery manifold 10 upstream of the users 5 and a return manifold 11 downstream of the users 5. The delivery manifold 10 and the return manifold 11 are connected respectively to the general inlet 2, for the distribution of the fluid to the users 5, and the general outlet 3, for the collection of the fluid in outlet from the users 5.

The conditioning plant also includes, for each user, at least one respective delivery line 6a exiting from the delivery manifold, and leading to the users; a respective partial or total closing organ 9 acts on each delivery line 6a. The closing organs 9 intercept the fluid in inlet to the users 5. The organs 9 are activated such as to vary the supply parameters of a determined user; in particular each closing organ can comprise an on/off valve which closes or opens supply to each user 5.

The return manifold 7 receives from each user a respective return line 12; on each return line a balancing valve 13 is placed whose function is to regulate the flow in outlet from the users as a function of temperature requirements required for each environment in which the user 5 is installed.

The plant also has a connecting circuit 14, which sets the delivery manifold 10 in fluid communication with the return manifold 11, bypassing the users. A shut-off valve 15 of the manifold 10 and a shut-off valve 16 of the return manifold 11 are arranged on the connecting circuit 14. The connecting circuit 14 is in turn in fluid connection with a discharge 17 interposed between the respective closing valves of the delivery manifold closing valve and return valve. The discharge 17 exhibits a general discharge valve 18 configured for discharging excess fluid present in the connecting circuit 14 after the circuit 4 setting. In addition to the general discharge valve 18, the drain circuit 17 exhibits a breather valve 19, positioned in a higher position than the manifolds and useful for eliminating any air bubbles inside the circuit 4.

The air conditioning plant 1 comprises a flow balancing system 20, active on the circuit 4. The balancing system 20 comprises at least a sensor 21 for detecting a real value which is dependent on the difference of intensity that a same physical parameter, such as a pressure or flow, assumes between a first section 22 upstream of the users 5 and a second section 23 downstream of the users. More specifically, the sensor can measure for example a difference or ratio between the real pressure in the section 22 and the pressure in the section 23, providing an output signal that is proportional to said difference or ratio between the pressures in the two above-cited sections.

The balancing system further exhibits a flow regulating organ 24 and a control device 25 connected to the sensor 21 and active on the flow regulating organ 24. In practice, the control device comprises a control unit, for example a microprocessor, capable of receiving the input signal from the sensor/s 21 and acting on the regulating organ as a function of the signal. According to one embodiment, the balancing system 20 is placed in connection with two detecting lines. More specifically, a first detecting line 26 places in fluid communication a first point 27, part of the first section 22 of the circuit 4 and located upstream of each user 5, with the sensor 21 of the balancing system 20; a second detecting line 26 places in fluid communication a second point 28, part of the second section 23 of the circuit 4 and located downstream of each user 5, with the sensor 21 of the balancing system 20. The sensor 21, for example a differential sensor, is configured such as to detect the difference in intensity between upstream and downstream of the users 5, the physical parameter of the fluid. In more detail, the sensor 21 detects a difference between a first real value related to the intensity of the physical parameter at the first point 27 of the circuit 4, and a second real value of the intensity of the same physical parameter related to the second point 29 of the circuit 4. The second point 29 is for example located substantially on the regulating organ, which is arranged downstream of each user 5, directly connected to the circuit 4 and in fluid connection with the sensor 21. If the detected parameter is the pressure, the sensor 21 includes a pressure differential sensor which generates an output signal proportional to the intensity or a function of the pressure difference between points 27 and 29.

Alternatively to the use of a differential sensor, a different configuration of the circuit can be realised in which the sensor 21 comprises a first sensor 30, in fluid connection with the first detecting line 26, which enables detecting the intensity of the physical parameter at the first point 27 of the circuit 4, and a second sensor 31, which is in fluid connection with the second detecting line 28, which detects the intensity of the same physical parameter at the second point 29 of the circuit 4.

The return channel 7 can comprise a line 32, interposed between a general outlet 33 of the return manifold 11 and the general outlet 3 of the plant 1, on which the regulating organ 24 is engaged.

As previously mentioned, the first point 27 is located upstream of the users 5, in particular, the first point 27 can be located substantially on the delivery manifold 10, while the second detecting point 29 is located on the regulating organ 24. As for the control device 25, it is connected to the above-described sensor/s and with the regulating organ. The control device is configured such as to enable a memorising of a reference value for the physical parameter of the fluid being measured with the described sensors. For example, the control device may comprise one or more microprocessor unit/s and associated memories capable of storing a code which when executed by the microprocessor unit/s makes the control device capable of performing the procedures described below. The control device is also configured such as to compare the reference value with the real value in relation to the same physical parameter, and such as to control the regulating organ 24 via an output signal such as to regulate the flow of fluid within the circuit 4 such as to maintain the value substantially aligned with the reference value. For example, the control device is configured to determine the real value as the difference between the values of the physical parameter measured in the first and second section by the sensor/s 21 (for example the difference in pressure between the two sections) and such as to compare the difference with a reference value stored by the control device. Following the comparison, if the difference between the pressures in the two above-mentioned sections is equal to or close to the set reference value, the control device does not exert any action up until a subsequent control cycle that can be activated manually or determined periodically by the control device or determined by the control device on reaching a threshold of maximum deviation between the real value and the reference value.

The plant also has available a display instrument 34 connected to the control device 25. The control device 25 is configured to control a visualising on the display instrument 34 of the real value (for example, the real difference between the pressures measured in sections 22 and 23), the reference value (for example, a reference pressure difference) or both the values of said physical parameter of the fluid.

In the example of realization shown, the regulating organ 24 and the control device 25 are part of a regulating valve 35 operating downstream of the users 5. The regulating valve 35 includes: a valve body 36 exhibiting at least an inlet 37, an outlet 38 and a channel 39 which sets the inlet 37 in fluid communication with the outlet 38. The valve body 36 exhibits connecting organs 40 arranged at the inlet 37 and the outlet 38 of the valve which enabling fixing the valve on the circuit 4. The connecting organs can be, for example, threading or rapid attachments. The channel 39 exhibits a seating 41 capable of accommodating a check element 42 which in cooperation with the valve body 36 forms the regulating organ 24 and defines a passage opening 43 between the inlet 37 and outlet 38. The passage opening 43 has variable amplitude as a function of the positions assumed by the check element 42 with regard to the valve body 36. The check element 42 is configured such as to act along a predetermined travel path which includes a predetermined number of operating positions that are angularly distinct or translationally staggered to one another: in practice, the control device is configured such as to move the check element between an operating position and a next operating position in a next step controlled by the control device 25 itself, as is described in more detail below.

The movement of the check element 42 may be rotary or translational. In the first case the movement takes place by rotation in an angle of movement around an axis of rotation 44 which extends transversally with respect to a prevalent development axis 50 of the channel 5. In the second case, the movement can take place in a straight direction.

Considering the case where the check element 42 performs a rotary movement: to perform a rotary movement, the check element 42 must have an outer surface that is substantially spherical or cylindrical, as can be seen in the accompanying figures. The various operative positions of the element 42 are angularly offset by one or more angular steps of amplitude that are controlled by the control device: at each angular step the control device is programmed to periodically re-verify the difference between the real value and the reference value, and if this difference is not acceptable, the control device will command a new angular step.

In the case of a rotary valve, the control device can be configured such that along at least part of the operating path (such as a tract greater than or equal to 10% of the operating path), the pitch angle has a value of less than 1° (one degree), optionally less than 0.5 ° (half a degree) in order to avoid destabilisation in the control of the valve.

The control device can also be made to adjust the angular pitch in order to maintain this constant pitch along the operating path.

Alternatively, the control device can adjust the pitch so that the amplitude thereof is variable along a tract (for example, for a distance greater than or equal to 10% of the operative path) or along the entire operating path. For example, a step can be included that is a function of the deviation between the real value of the physical parameter detected by the sensors and the reference value of the physical parameter itself: for example, the step can be relatively large (for example one or more degrees) if the difference between the real value and the reference value is greater than a certain threshold and may be relatively small (e.g. less than one degree) if the difference between the real and the reference values is below a certain threshold. Alternatively, in case of variable pitch, the angular pitch can be reduced progressively during the opening or closing of the valve: optionally the step may for example be reduced gradually, exponentially as the valve is opened.

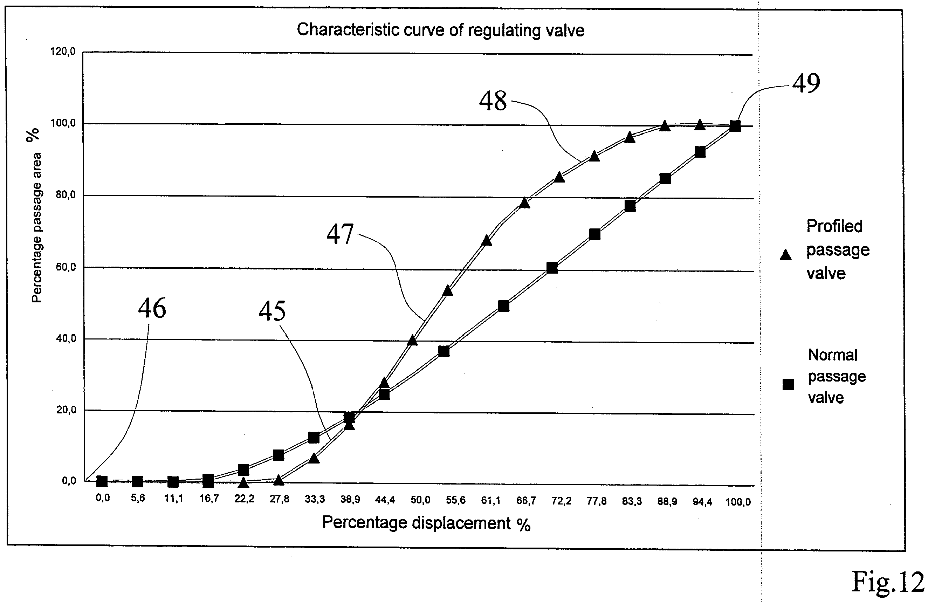

As shown in figure 12, the tract of the operating path where the pace is variable and possibly less than one degree includes an initial tract 45 between an initial position 46 of complete closure of the passage opening 43 and an intermediate position 47 in which the passage opening 43 is open no more than 50%, optionally not more than 40%. The tract of the path in which the pitch is variable and possibly less than a degree also includes a final section 48 between a final position of complete opening of the passage opening 43 and the intermediate position 47 in which the passage opening 43 is open no more than 40%, optionally not more than 30%.

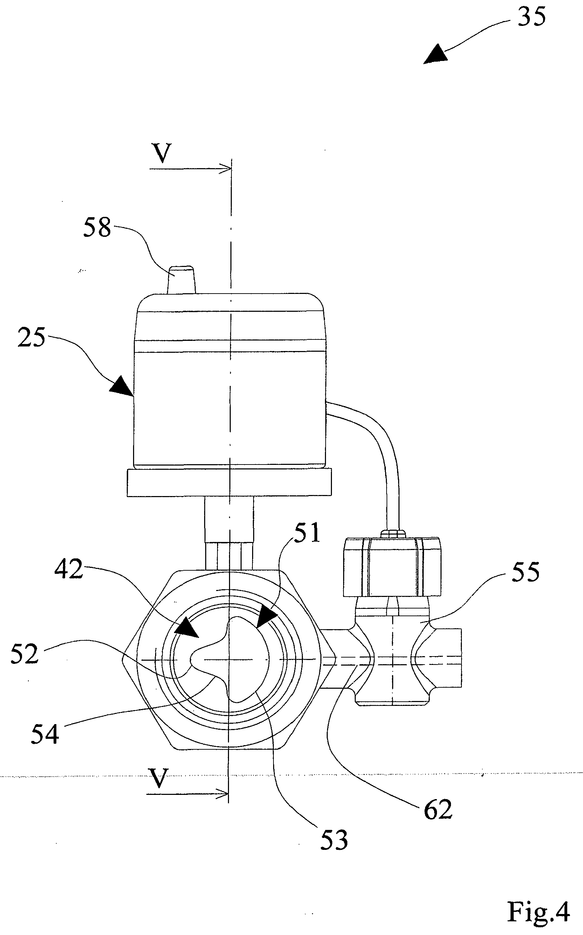

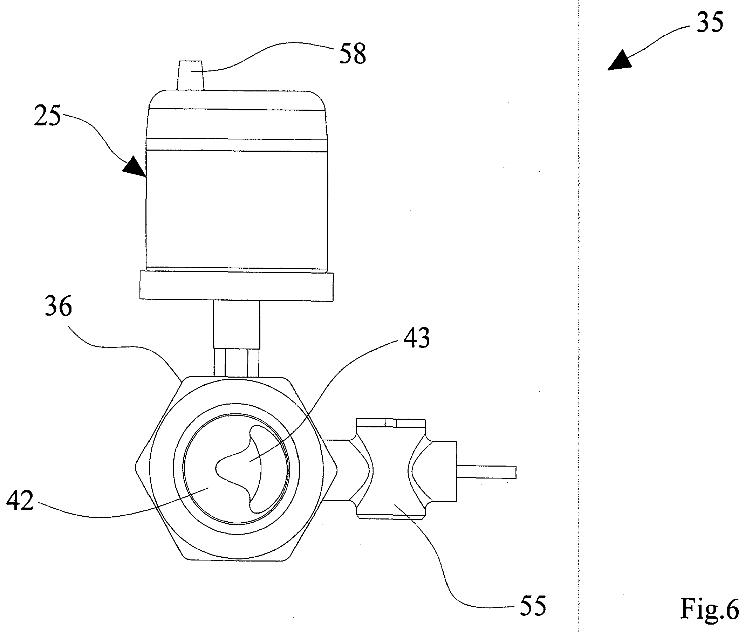

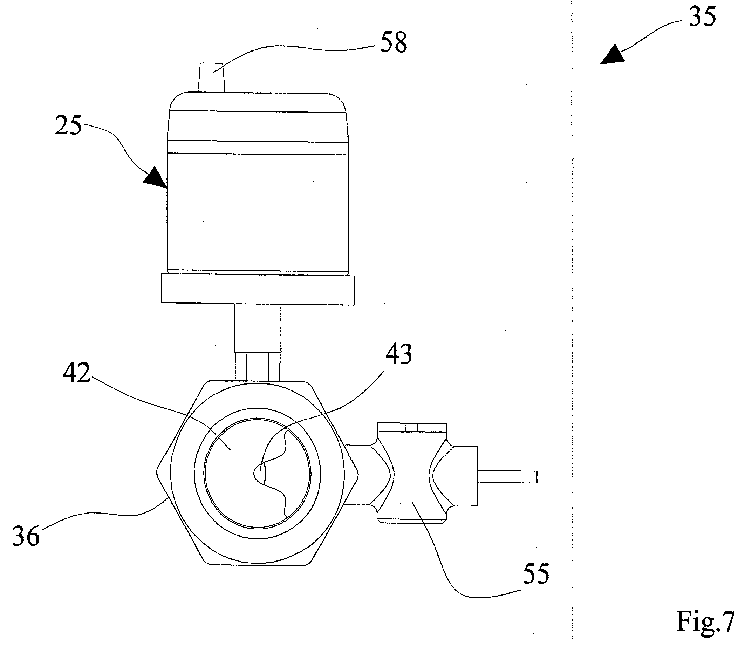

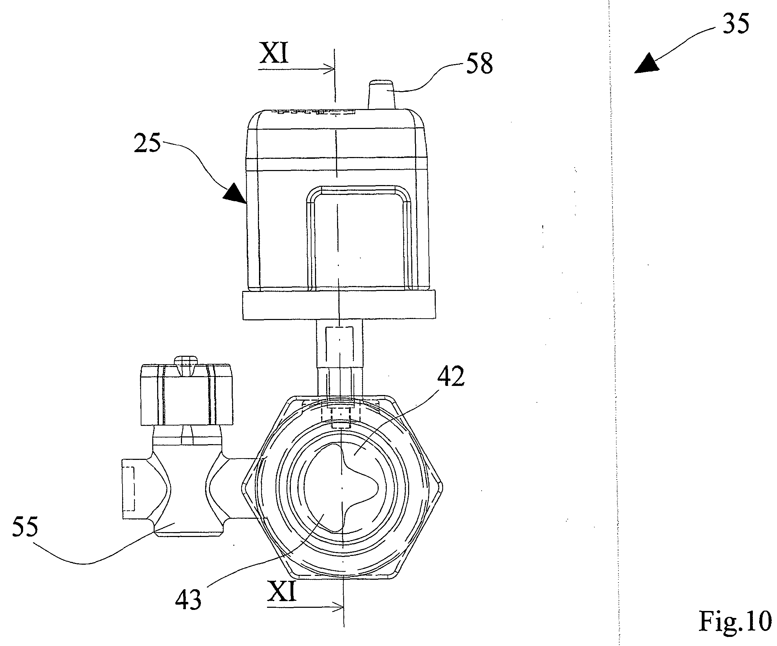

In an embodiment, illustrated in figures 4, 6, 7 and 10, the passage opening 43 is shaped such that, following a movement of the check element 42 over a first and/or final tract (which may coincide with the lines 45, 48 of figure 12) of the operating path, the incremental relationship between the percentage change of the area of the passage opening 43 and the percentage displacement of the check element 42 exhibits an absolute value that is variable along the path but comprised between 0 and 4, optionally between 0 and 2.5. Thanks to this type of variation the increase in area upon the movement of the check element is not excessive and thus enables an efficient control of the pressure fall (and flow) through the valve, enabling better management of the plant balance (again, a curve characteristic of a profiled-opening valve is represent in figure 12 - see the curve with the continuous tract with reference triangles).

As can be seen in figure 12, over the initial tract 45 that includes no more than 30% of the operating path, the incremental ratio between the percentage variation of the passage opening 43 area and the percentage displacement of the check element 42 exhibits an absolute value variable along the path but always comprised between 0 and 4, for example between 0 and 2.5. More specifically, the incremental ratio falls in a range between 0 and 1.5 in the initial tract that is between 20 and 30% of the operating path. In turn, over the final tract 48 that includes no more than 40% of the operating path, the ratio between incremental percentage change of the passage opening 43 and the percentage displacement of the check element 42 exhibits an absolute value that is variable but comprised between 0 and 4, for example between 0 and 2.5. More specifically this incremental ratio falls in a range between 0 and 1.5 in a final tract that is between 20 and 30% of the operating path. Finally, still with reference to figure 12, over an intermediate section 47 of the operating path between the initial tract 45 and the final tract 48 comprising between 20% and 40% of the operating path, the incremental ratio between percentage change of the area of the passage opening 43 and the percentage displacement of the check element 42 exhibits a substantially constant absolute value.

Note that the percentage displacement is defined as the ratio between the displacement of the check element 42 and the operating path.

In turn, the percentage change of the passage opening 43 is defined as the ratio between the change in the passage area following a displacement of the check element 42 and a reference area, for example the area of complete opening of the passage opening 43.

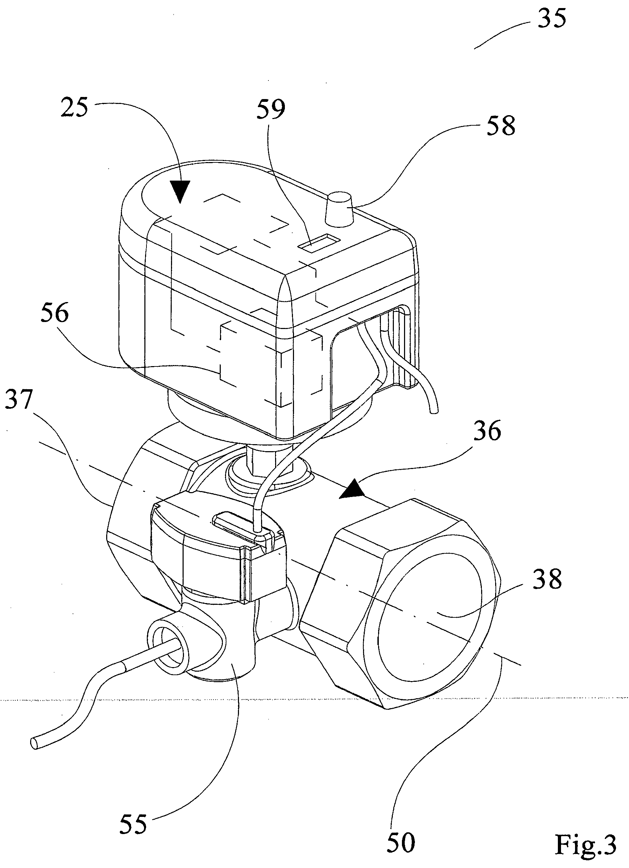

As previously described the check element 42 is operating internally of the channel 39 of valve body 36, and is configured to vary the passage opening 43 through its movement. As can be seen from the figures, the check element 42 is configured to rotate at an angle of motion with respect to an axis of rotation 44 which extends transversally with respect to a prevalent development axis 50 of the channel 39. In particular, the check element 42 can be configured such as to perform a displacement that will reduce or increase the passage opening 43. According to a front view, as can be seen in figure 4 the passage opening 43 is characterized by a front profiling 51 presenting two substantially symmetrical parts in which each part has a first portion 52, shaped as an arc of a circle, a second portion 53, shaped as an arc of a circle having a smaller radius than that of the first portion 52, a connecting curve 54 which connects the first portion 52 with the second portion 53. According to the longitudinal view, the passage opening has a longitudinal shaping 61, which is characterized by a progressively increasing section from the inlet 37 to the outlet 38 of the valve body 36. In the example shown, although the section progressively grows, the outline of this section in the front view can remain constant and equal to what described above and shown in figure 3.

The movement of the regulating organ and therefore the check element 42 is, as mentioned, regulated by the control device 25 which is in particular configured such as to receive at least a first input signal relating to the intensity of the physical parameter of the fluid circulating in the first section of the plant and a second signal relating to the intensity of the same physical parameter of a fluid circulating in the second section of the plant, and then generate an output signal according to the first and second signal. The first and second signals are related to the intensity of fluid pressure respectively in the first and second section of the plant.

The output signal is control differential signal comprising a difference or ratio between the intensity of the first and second signal; for example the control differential signal includes the difference or the ratio between the intensity of fluid pressure in the first section and the intensity of fluid pressure in the second section.

The intensity of the output signal is used to control the position of the check element 34 with a cyclically executed control loop. As a sensor a differential pressure gauge 55 can be used which receives in input the first and second signal and generates in output a control differential signal. The differential pressure gauge 55 is disposed on the valve body 36 of the regulating valve 35 and receives the first signal from the first point 27 and the second signal corresponding to the second point 29 of the plant. The second point is located substantially at the outlet of the regulating valve, and is therefore placed after the check element 42, according to the flow direction. The output 38 of the valve and the pressure differential gauge 55 are in fluid connection via a passage 62.

The intensity of the value measured by the differential pressure gauge 55 is either proportional to or a function of the pressure difference between the first and second points 27, 29. Although reference has been made just above to a physical parameter corresponding to the pressure, the physical parameter can also be the delivery; in this case the differential sensor may be a differential between the flow rate in the first and the second segment.

On the section where the valve body is placed a temperature sensor can also be present which measures the temperature of the fluid in outlet from the valve.

The control device 25 is also configured to allow the setting of at least one reference value, compare the reference value with the value of the differential signal control and generate the output signal as a function of the comparison. The comparison of the signals influences the displacement of the check element 42, which is moved directly by an actuator 56, active on the check element 42, along the operating path. The actuator 56 can be electric or mechanical. The case analyzed shows an actuator 56 of an electrical type that enables placing the check element 42 in a plurality of positions along the operating path. The control device 25 regulates the movement of the check element 42, thereby reducing the difference between the reference value and the value of the control differential signal.

The control device 25 includes a memory which enables storage of a plurality of predetermined reference values and allows the selection thereof by a user.

The control device 25 further comprises setting means 57. The setting means 57 are connected to the control device 25 and enable setting a fixed number of control parameters which define working conditions.

The control device 25 further comprises inlet means 58, which enable a reference value to be set, for example by enabling the setting of a reference differential pressure between the first and second sections.

The control parameters include: a first control parameter on the type of check element 42, a second control parameter relating to an maximum increase in the values of the first and second signal or in the value of the difference between the first and second signals, a third control parameter relating to the type of function which links the outlet signal to the first and the second signals , a fourth control parameter relative to the velocity of convergence between the real value and the reference value.

Going into further detail it can be specified that, in the case where the check element 42 is of the circular type, the first parameter determines the direction of rotation of the check element 42. Instead the second parameter comprises the bottom-scale values of the pressure the differential pressure gauge 55 thus defining a range of predetermined values. The third control parameter specifies the type of control function that links the output signal to said first and second signal: for example, this function includes a link of a proportional or integral or derivative type, or a combination of these. The fourth control parameter regulates the speed of convergence of the real value of the reference value set to the control device 25.

The setting means 57 also enable memorisation of a predetermined number of configurations relating to values of the control parameters useful for the management of the control device 25.

In the case shown in the figures the setting means are micro-switches which have only two values for each parameter setting control.

The regulating valve 35 enables monitoring the real value and the reference value by means of an acoustic signal 59 and/or optical signal means 60. These signalling devices are connected to the control device 25 which is configured to control the acoustic and/or optical means 59, 60 such as to provide: an optical and/or an instantaneous value of the output signal, and/or an optical and/or an acoustic displacement of an instantaneous value of the output signal with respect to a reference value.

## Claims

1. A regulating valve (35) for fluids for plants, in particular conditioning plants, comprising:
at least a valve body (36) exhibiting at least an inlet (37), at least an outlet (38) and at least a channel (39) which sets the inlet (37) in fluid communication with the outlet (38),
at least a fluid check element (42) operating in the channel (39), the fluid check element (42) defining a passage opening (43) for fluid between the inlet (37) and the outlet (38) which has a variable size as a function of positions assumed by the check element (42) in relation to the valve body (36) along a predetermined operating path, the passage opening (43) being shaped such that following a movement of the check element (42) over at least an initial and/or final tract of the operating path, the incremental ratio between percentage variation of the area of the passage opening (43) and the percentage displacement of the check element (42) exhibits an absolute value comprised between 0 and 4.00, optionally between 0.00 and 2.50,
**characterized in that** the valve further comprises:
a control device (25) configured for:
receiving in input at least a first signal relating to an intensity of a physical parameter of a fluid circulating in a first section (22) of a plant and a second signal relating to the intensity of the physical parameter of a fluid circulating in the second section (23) of the plant,
generating an output signal as a function of the first signal and the second signal, the output signal being usable for controlling the position of the check element (42),
wherein the passage opening (43) of the fluid check element (42) comprises a longitudinal shaping relating to a longitudinal section with to respect to the prevalent development axis of the channel, exhibiting a progressively growing section from the inlet to the outlet of the valve body.

2. The regulating valve of claim 1, wherein the incremental ratio between the percentage variation of the area of the passage opening (43) and the percentage displacement of the check element (42), over the initial tract which comprises not more than 30% of the operating path, exhibits an absolute value comprised between 0 and 4, optionally between 0 and 2.5;
wherein the incremental ratio between percentage variation of the area of the passage (43) opening and the percentage displacement of the check organ (42), over the final tract (48) which comprises not more than 40% of the operating path, exhibits an absolute value comprised between 0 and 4, optionally between 0 and 2.5; wherein
the incremental ratio between percentage variation of the area of the passage (43) opening and the percentage displacement of the check element (42) exhibits an absolute value which is substantially constant over an intermediate tract (47) of the operating path comprised between the initial tract (45) and the final tract (48), and wherein the intermediate tract (47) comprises between 20% and 40% of the operating path,
and wherein the percentage variation of the area of the passage (43) opening comprises the ratio between the variation of the passage (43) area following a displacement of the check organ (42) and a reference area, and wherein the percentage displacement comprises the ratio between the displacement of the check element (42) and the operating path.

3. The regulating valve of any one of the preceding claims, wherein the first signal and the second signal relate to the intensity of the fluid pressure in the first section (22) and the second section (23) of the plant, and wherein generating the output signal comprises determining a control differential signal comprising a difference or a ratio between the intensity of the first signal and the second signal, optionally wherein the control differential signal comprises the difference or ratio between the intensity of the fluid pressure in the first section (22) and the intensity of the fluid pressure in the second section (23), still more optionally wherein the control device (25) comprises a pressure differential gauge (55) which receives in input the first signal and the second signal and generates in output the control differential signal.

4. The regulating valve of any one of the preceding claims, wherein the control device (25) is configured to:
enable setting at least a reference value,
compare the reference value with the value of the control differential signal,
generate the output signal as a function of the comparison.

5. The regulating valve of any one of the preceding claims, wherein the control device comprises an actuator (56), for example an electrical actuator, acting on the check element (42), the actuator (56) enabling displacement of the check element (42) along the operating path, the control device (25) being connected with the actuator (56), the control device (25) further being configured such as to control a movement of the check element (42) as a function of the output signal.

6. The regulating valve of claim 5, wherein the control device is configured for:
positioning the check element (42) according to a plurality of positions along the operating path, the positions being separated by a step, the control device repeating the steps of comparison and generation at each of the positions;
controlling the size of the step by which the actuator moves the check element as a function of the value of the control differential signal and the reference value, optionally wherein the control device controls the size of the step according to which the actuator moves the check element as a function of the difference between the value of the control differential signal and the reference value.

7. The regulating valve of any one of the preceding claims, wherein the regulating valve (1) comprises acoustic signalling means (59) and/or optical signalling means (60), the acoustic signalling means (59) and/or optical signalling means (60) being connected to the control device (25) which is configured such as to command the signalling means (59, 60) to supply:
an optical and/or acoustic representation of an instant value of the output signal, and/or
an optical and/or acoustic representation of displacement of an instant value of the output signal with respect to a reference value.

8. The regulating valve of any one of the preceding claims, wherein the control device (25) is configured such as to control the movement of the check element (42) and to determine the reduction of the difference between the reference value and the value of the control differential signal.

9. The regulating valve of any one of the preceding claims, wherein the control device (25) comprises setting means (57), the setting means (57) being connected to the control device (25) and enabling setting of a predetermined number of control parameters which define operating conditions of the valve, and wherein the control parameters comprise at least a parameter selected from the group having:
a first control parameter relating to a type of movement of the check element,
a second control parameter relating to a maximum excursion of the values of the first signal and the second signal or of the value of the difference between the first signal and the second signal,
a third control parameter relating to the type of function connecting the output signal and the first signal and the second signal,
a fourth control parameter relating to a velocity of convergence between the real value and the reference value,
wherein the second control parameter comprises bottom scale values of the pressure differential gauge (55),
wherein in relation to the third parameter the function comprises a link of a proportional or integral or derivative type, or a combination thereof, and wherein the fourth control parameter specifies a convergence time defined as a time transitory in which the value of the control differential signal converges to the reference value,
and wherein the setting means (57) enable memorisation of a predetermined number of configurations relating to values of the control parameters which are useful for managing the control device (25), optionally wherein the setting means (57) comprise microswitches.

10. The regulating valve of any one of the preceding claims, wherein the control device (25) comprises input means (58), the input means (58) enabling setting at least a reference value, optionally enabling setting a reference pressure differential between the first section (22) and the second section (23), and
wherein the control device (25) comprises a memory and is configured such as to enable memorisation of a plurality of predetermined reference values and to enable a user to select at least one of the values.

11. The regulating valve of any one of the preceding claims from 2 to 10, wherein the check element (42) operating in the channel (39) of the valve body (36) is configured such as to rotate according to a movement angle with respect to a rotation axis (44) which extends transversally with respect to a prevalent development axis (50) of the channel (39), optionally wherein the check organ (42) exhibits a lateral rotating surface having a cylindrical or spherical conformation;
wherein the incremental ratio between a percentage variation of the area of the passage opening (43) and the percentage displacement of the check element (42), over the initial tract comprised between 20% and 30% of the operating path, falls within a range of between 0 and 1.5, and/or
wherein the incremental ratio between a percentage variation of the area of the passage opening (43) and the percentage displacement of the check element (42), over the final tract comprised between 20% and 30% of the operating path, falls within a range of between 0 and 1.5.

12. The regulating valve of any one of the preceding claims, wherein the passage opening (43) comprises a frontal shaping (51) exhibiting two substantially symmetrical parts in which each of the parts exhibits a first portion (52) shaped as an arc of a circle, a second portion (53) shaped as an arc of a circle having a smaller radius than the arc of the first portion (52), a connecting inflection (53) which connects the first portion (52) with the second portion (53), and/or wherein the passage opening (43) comprises a longitudinal shaping (61) relating to a longitudinal section with respect to the prevalent development axis (50) of the channel (39), exhibiting a progressively growing section from the inlet (37) to the outlet (38) of the valve body (36).

## Patentansprüche

1. Regelventil (35) für Fluide in Anlagen, insbesondere Klimaanlagen, umfassend:
mindestens einen Ventilkörper (36), der mindestens einen Einlass (37), mindestens einen Auslass (38) und
mindestens einen Kanal (39) aufweist, der den Einlass(37) mit dem Auslass (38) in Fluidverbindung setzt,
mindestens ein Fluidsperrelement (42), das im Kanal (39) wirkt, wobei das Fluidsperrelement (42) eine Durchlassöffnung (43) für das Fluid zwischen dem Einlass (37) und dem Auslass (38) definiert, die eine variable Größe in Abhängigkeit von den Positionen besitzt, die das Sperrelement (42) bezogen auf den Ventilkörper (36) entlang einem vorgegebenen Betriebsweg einnimmt, wobei die Durchlassöffnung (43) derart geformt ist, dass nach einer Bewegung des Prüfelements (42) über mindestens einen Anfangs- und/oder Endabschnitt des Betriebswegs das inkrementelle Verhältnis zwischen der prozentualen Änderung der Fläche der Durchlassöffnung (43) und der prozentualen Verschiebung des Sperrelements (42) einen absoluten Wert aufweist, der zwischen 0 und 4,00, wahlweise zwischen 0,00 und 2,50 liegt,
**dadurch gekennzeichnet, dass** das Ventil weiter umfasst:
ein Steuergerät (25) das konfiguriert ist zum:
Empfangen am Eingang von mindestens einem ersten Signal bezüglich der Stärke eines physikalischen Parameters eines Fluides, das in einem ersten Abschnitt (22) einer Anlage zirkuliert, und einem zweiten Signal bezüglich der Stärke eines physikalischen Parameters eines Fluides, das in einem zweiten Abschnitt (23) der Anlage zirkuliert,
Erzeugen eines Ausgangssignals in Abhängigkeit des ersten Signals und des zweiten Signals, wobei das Ausgangssignal zur Steuerung der Position des Sperrelements (42) verwendet werden kann,
wobei die Durchlassöffnung (43) des Fluidsperrelements (42) eine längslaufende Formgebung bezüglich eines Längsschnitts bezogen auf die vorherrschende Entwicklungsachse des Kanals umfasst, die einen vom Einlass zum Auslass des Ventilkörpers zunehmend größer werdenden Querschnitt aufweist.

2. Regelventil nach Anspruch 1, wobei das inkrementelle Verhältnis zwischen der prozentualen Änderung der Fläche der Durchlassöffnung (43) und der prozentualen Verschiebung des Sperrelements (42) über den Anfangsabschnitt, der nicht mehr als 30% des Betriebswegs umfasst, einen absoluten Wert aufweist, der zwischen 0 und 4, wahlweise zwischen 0 und 2,5 liegt;
wobei das inkrementelle Verhältnis zwischen der prozentualen Änderung der Fläche der Durchlassöffnung (43) und der prozentualen Verschiebung des Sperrorgans (42) über den Endabschnitt (48), der nicht mehr als 40% des Betriebswegs umfasst, einen absoluten Wert aufweist, der zwischen 0 und 4, wahlweise zwischen 0 und 2,5 liegt; wobei
das inkrementelle Verhältnis zwischen der prozentualen Änderung der Fläche der Durchlassöffnung (43) und der prozentualen Verschiebung des Sperrelements (42) einen absoluten Wert aufweist, der über einen Zwischenabschnitt (47) des Betriebswegs zwischen dem Anfangsabschnitt (45) und dem Endabschnitt (48) im Wesentlichen konstant ist, und wobei der Zwischenabschnitt (47) zwischen 20% und 40% des Betriebswegs umfasst,
und wobei die prozentuale Änderung der Fläche der Durchlassöffnung (43) das Verhältnis zwischen der Änderung der Durchlassfläche (43) nach einer Verschiebung des Sperrorgans (42) und einer Bezugsfläche umfasst, und wobei die prozentuale Verschiebung das Verhältnis zwischen der Verschiebung des Sperrelements (42) und dem Betriebsweg umfasst.

3. Regelventil nach einem der vorhergehenden Ansprüche, wobei sich das erste Signal und das zweite Signal auf die Stärke des Fluiddrucks im ersten Abschnitt (22) und im zweiten Abschnitt (23) der Anlage beziehen, und wobei das Erzeugen des Ausgangssignals die Festlegung eines Regeldifferenzsignals umfasst, umfassend eine Differenz oder ein Verhältnis zwischen der Stärke des ersten Signals und des zweiten Signals, wobei wahlweise das Regeldifferenzsignal die Differenz oder das Verhältnis zwischen der Stärke des Fluiddrucks im ersten Abschnitt (22) und der Stärke des Fluiddrucks im zweiten Abschnitt (23) umfasst, wobei weiter wahlweise das Steuergerät (25) ein Differenzdruckmessgerät (55) umfasst, das als Eingang das erste Signal und das zweite Signal empfängt und als Ausgang das Regeldifferenzsignal erzeugt.

4. Regelventil nach einem der vorhergehenden Ansprüche, wobei das Steuergerät (25) konfiguriert ist, um:
das Einstellen von mindestens einem Bezugswert zu ermöglichen,
den Bezugswert mit dem Wert des Regeldifferenzsignals zu vergleichen, und
das Ausgangssignal in Abhängigkeit von dem Vergleich zu erzeugen.

5. Regelventil nach einem der vorhergehenden Ansprüche, wobei das Steuergerät einen Aktuator (56), beispielsweise einen elektrischen Aktuator umfasst, der auf das Sperrelement (42) einwirkt, wobei der Aktuator (56) die Verschiebung des Sperrelements (42) entlang eines Betriebswegs ermöglicht, wobei das Steuergerät (25) mit dem Aktuator (56) verbunden ist, wobei das Steuergerät (25) ferner konfiguriert ist, um eine Bewegung des Sperrelements (42) in Abhängigkeit vom Ausgangssignal zu steuern.

6. Regelventil nach Anspruch 5, wobei das Steuergerät konfiguriert ist, um:
das Sperrelement (42) entsprechend einer Mehrzahl von Positionen entlang des Betriebswegs zu positionieren, wobei die Positionen durch einen Schritt getrennt sind, wobei das Steuergerät die Schritte des Vergleichens und des Erzeugens an jeder Position wiederholt;
die Größe des Schritts zu steuern, um die der Aktuator das Sperrelement in Abhängigkeit vom Wert des Regeldifferenzsignals und des Bezugswerts bewegt, wobei wahlweise das Steuergerät die Größe des Schritts steuert, um die der Aktuator das Sperrelement in Abhängigkeit der Differenz zwischen dem Wert des Regeldifferenzsignals und dem Bezugswert bewegt.

7. Regelventil nach einem der vorhergehenden Ansprüche, wobei das Regelventil (1) akustische Signalmittel (59) und/oder optische Signalmittel (60) umfasst, wobei die akustischen Signalmittel (59) und/oder die optischen Signalmittel (60) mit dem Steuergerät (25) verbunden sind, das entsprechend konfiguriert ist, um den Signalmitteln (59, 60) zu befehlen:
eine optische und/oder akustische Darstellung eines Momentanwertes des Ausgangssignals, und/oder eine optische und/oder akustische Darstellung der Verschiebung eines Momentanwertes des Ausgangssignals bezogen auf einen Bezugswert bereitzustellen.

8. Regelventil nach einem der vorhergehenden Ansprüche, wobei das Steuergerät (25) entsprechend konfiguriert ist, um die Bewegung des Sperrelements (42) zu steuern und die Verminderung der Differenz zwischen dem Bezugswert und dem Wert des Regeldifferenzsignals festzustellen.

9. Regelventil nach einem der vorhergehenden Ansprüche, wobei das Steuergerät (25) Einstellmittel (57) umfasst, wobei die Einstellmittel (57) mit dem Steuergerät (25) verbunden sind und die Einstellung einer vorgegebenen Anzahl von Regelparametern ermöglichen, die die Betriebsbedingungen des Ventils definieren, und wobei die Regelparameter mindestens einen Parameter umfassen, der ausgewählt ist aus der Gruppe aufweisend:
einen ersten Regelparameter bezogen auf eine Bewegungsart des Sperrelements,
einen zweiten Regelparameter bezogen auf eine Höchstabweichung der Werte des ersten Signals und des zweiten Signals oder des Differenzwerts zwischen dem ersten Signal und dem zweiten Signal,
einen dritten Regelparameter bezogen auf die Art der Abhängigkeit, die das Ausgangssignal mit dem ersten Signal und dem zweiten Signal verbindet,
einen vierten Regelparameter bezogen auf die Konvergenzgeschwindigkeit zwischen dem Istwert und dem Bezugswert,
wobei der zweite Regelparameter untere Skalenwerte des Differenzdruckmessgeräts (55) umfasst, wobei die Funktion bezogen auf den dritten Parameter eine Verknüpfung von Proportional- oder Integral- oder Differentialart oder eine Kombination derselben umfasst und wobei der vierte Regelparameter eine Konvergenzzeit angibt, die als zeittransitorisch definiert wird, in der der Wert des Regeldifferenzsignals gegen den Bezugswert konvergiert, und
wobei die Einstellmittel (57) die Speicherung einer vorgegebenen Anzahl von Konfigurationen bezogen auf Werte der Regelparameter ermöglichen, die für die Regelung des Steuergeräts (25) nützlich sind, wobei die Einstellmittel (57) wahlweise Mikroschalter umfassen.

10. Regelventil nach einem der vorhergehenden Ansprüche, wobei das Steuergerät (25) Eingabemittel (58) umfasst, wobei die Eingabemittel (58) die Einstellung von mindestens einem Bezugswert ermöglichen, wahlweise die Einstellung eines Bezugsdruckdifferentials zwischen dem ersten Abschnitt (22) und dem zweiten Abschnitt (23) ermöglichen, und wobei das Steuergerät (25) einen Speicher umfasst und konfiguriert ist, um die Speicherung einer Mehrzahl von vorgegebenen Bezugswerten zu ermöglichen und einem Benutzer die Auswahl von mindestens einem dieser Werte zu ermöglichen.

11. Regelventil nach einem der vorhergehenden Ansprüche 2 bis 10, wobei das Sperrelement (42), das im Kanal (39) des Ventilkörpers (36) wirkt, konfiguriert ist, um sich gemäß einem Bewegungswinkel bezogen auf eine Drehachse (44) zu drehen, die sich quer bezogen auf eine vorherrschende Entwicklungsachse (50) des Kanals (39) erstreckt, wobei wahlweise das Sperrorgan (42) eine seitliche Drehfläche mit einer zylinder- oder kugelförmigen Ausbildung aufweist;
wobei das zunehmende Verhältnis zwischen einer prozentualen Änderung der Fläche der Durchlassöffnung (43) und der prozentualen Verschiebung des Sperrelements (42) über den Anfangsabschnitt, der zwischen 20% und 30% des Betriebswegs umfasst, in einen Bereich zwischen 0 und 1,5 fällt und/oder
wobei das zunehmende Verhältnis zwischen einer prozentualen Änderung der Fläche der Durchlassöffnung (43) und der prozentualen Verschiebung des Sperrelements (42) über den Endabschnitt, der zwischen 20% und 30% des Betriebswegs umfasst, in einen Bereich zwischen 0 und 1,5 fällt.

12. Regelventil nach einem der vorhergehenden Ansprüche, wobei die Durchlassöffnung (43) eine stirnseitige Formgebung (51) umfasst, die zwei im Wesentlichen symmetrische Teile aufweist, in denen jeder der Teile einen ersten Anteil (52) aufweist, der als Kreisbogen geformt ist, einen zweiten Anteil (53), der als Kreisbogen mit einem kleineren Radius als der Kreisbogen des ersten Anteils (52) geformt ist, eine verbindende Biegung (53), die den ersten Anteil (52) mit dem zweiten Anteil (53) verbindet, und/oder wobei die Durchlassöffnung (43) eine längslaufende Formgebung (61) im Verhältnis zu einem Längsschnitt in Bezug auf die Hauptentwicklungsachse (50) des Kanals (39) umfasst, die einen vom Einlass (37) zum Auslass (38) des Ventilkörpers (36) zunehmend größer werdenden Querschnitt aufweist.

## Revendications

1. Vanne de régulation (35) de fluides pour des installations, en particulier des installations de conditionnement, comprenant :
au moins un corps de vanne (36) présentant au moins une admission (37), au moins un refoulement (38) et au moins un canal (39) qui établit l'admission (37) en communication fluidique avec le refoulement (38),
au moins un élément de vérification de fluide (42) fonctionnant dans le canal (39), l'élément de vérification de fluide (42) définissant une ouverture de passage (43) pour du fluide entre l'admission (37) et le refoulement (38) qui a une taille variable en fonction de positions adoptées par l'élément de vérification (42) par rapport au corps de vanne (36) le long d'un chemin fonctionnel prédéterminé, l'ouverture de passage (43) étant façonnée de sorte qu'en suivant un mouvement de l'élément de vérification (42) sur au moins une voie initiale et/ou finale du chemin fonctionnel, le rapport incrémentiel entre le pourcentage de variation de l'aire de l'ouverture de passage (43) et le pourcentage de déplacement de l'élément de vérification (42) présente une valeur absolue comprise entre 0 et 4,00, facultativement entre 0,00 et 2,50,
**caractérisée en ce que** la vanne comprend en outre :
un dispositif de commande (25) configuré pour :
recevoir en entrée au moins un premier signal relatif à une intensité d'un paramètre physique d'un fluide circulant dans une première section (22) d'une installation et un second signal relatif à l'intensité du paramètre physique d'un fluide circulant dans la seconde section (23) de l'installation,
générer un signal de sortie en fonction du premier signal et du second signal, le signal de sortie étant utilisable pour commander la position de l'élément de vérification (42),
dans laquelle l'ouverture de passage (43) de l'élément de vérification de fluide (42) comprend un façonnage longitudinal relatif à une section longitudinale par rapport à l'axe de développement prévalent du canal, présentant une section progressivement croissante depuis l'admission jusqu'au refoulement du corps de vanne.

2. Vanne de régulation selon la revendication 1, dans laquelle le rapport incrémentiel entre le pourcentage de variation de l'aire de l'ouverture de passage (43) et le pourcentage de déplacement de l'élément de vérification (42), sur la voie initiale qui comprend pas plus de 30 % du chemin fonctionnel, présente une valeur absolue comprise entre 0 et 4, facultativement entre 0 et 2,5 ;
dans laquelle le rapport incrémentiel entre le pourcentage de variation de l'aire de l'ouverture de passage (43) et le pourcentage de déplacement de l'organe de vérification (42), sur la voie finale (48) qui comprend pas plus de 40 % du chemin fonctionnel, présente une valeur absolue comprise entre 0 et 4, facultativement entre 0 et 2,5 ;
dans laquelle
le rapport incrémentiel entre le pourcentage de variation de l'aire de l'ouverture de passage (43) et le pourcentage de déplacement de l'élément de vérification (42) présente une valeur absolue qui est sensiblement constante sur une voie intermédiaire (47) du chemin fonctionnel comprise entre la voie initiale (45) et la voie finale (48), et dans laquelle la voie intermédiaire (47) comprend entre 20 % et 40 % du chemin fonctionnel,
et dans laquelle le pourcentage de variation de l'aire de l'ouverture de passage (43) comprend le rapport entre la variation de l'aire de passage (43) suivant un déplacement de l'organe de vérification (42) et une aire de référence, et dans laquelle le pourcentage de déplacement comprend le rapport entre le déplacement de l'élément de vérification (42) et le chemin fonctionnel.

3. Vanne de régulation selon l'une quelconque des revendications précédentes, dans laquelle le premier signal et le second signal concernent l'intensité de la pression de fluide dans la première section (22) et la seconde section (23) de l'installation, et dans laquelle la génération du signal de sortie comprend la détermination d'un signal de différentiel de commande comprenant une différence ou un rapport entre l'intensité du premier signal et du second signal, facultativement dans laquelle le signal de différentiel de commande comprend la différence ou le rapport entre l'intensité de la pression de fluide dans la première section (22) et l'intensité de la pression de fluide dans la seconde section (23), encore plus facultativement dans laquelle le dispositif de commande (25) comprend une jauge de pression différentielle (55) qui reçoit en entrée le premier signal et le second signal et génère en sortie le signal de différentiel de commande.

4. Vanne de régulation selon l'une quelconque des revendications précédentes, dans laquelle le dispositif de commande (25) est configuré pour :
permettre l'établissement d'au moins une valeur de référence,
comparer la valeur de référence à la valeur du signal de différentiel de commande,
générer le signal de sortie en fonction de la comparaison.

5. Vanne de régulation selon l'une quelconque des revendications précédentes, dans laquelle le dispositif de commande comprend un actionneur (56), par exemple un actionneur électrique, agissant sur l'élément de vérification (42), l'actionneur (56) permettant un déplacement de l'élément de vérification (42) le long du chemin fonctionnel, le dispositif de commande (25) étant raccordé à l'actionneur (56), le dispositif de commande (25) étant en outre configuré de façon à commander un mouvement de l'élément de vérification (42) en fonction du signal de sortie.

6. Vanne de régulation selon la revendication 5, dans laquelle le dispositif de commande est configuré pour :
positionner l'élément de vérification (42) selon une pluralité de positions le long du chemin fonctionnel, les positions étant séparées par un pas, le dispositif de commande répétant les étapes de comparaison et de génération à chacune des positions ;
commander la taille du pas grâce auquel l'actionneur bouge l'élément de vérification en fonction de la valeur du signal de différentiel de commande et de la valeur de référence, facultativement dans laquelle le dispositif de commande commande la taille du pas selon lequel l'actionneur bouge l'élément de vérification en fonction de la différence entre la valeur du signal de différentiel de commande et la valeur de référence.

7. Vanne de régulation selon l'une quelconque des revendications précédentes, dans laquelle la vanne de régulation (1) comprend un moyen de signalisation acoustique (59) et/ou un moyen de signalisation optique (60), le moyen de signalisation acoustique (59) et/ou le moyen de signalisation optique (60) étant raccordés au dispositif de commande (25) qui est configuré de façon à ordonner aux moyens de signalisation (59, 60) de fournir :
une représentation optique et/ou acoustique d'une valeur instantanée du signal de sortie, et/ou
une représentation optique et/ou acoustique de déplacement d'une valeur instantanée du signal de sortie par rapport à une valeur de référence.

8. Vanne de régulation selon l'une quelconque des revendications précédentes, dans laquelle le dispositif de commande (25) est configuré de façon à commander le mouvement de l'élément de vérification (42) et déterminer la réduction de la différence entre la valeur de référence et la valeur du signal de différentiel de commande.

9. Vanne de régulation selon l'une quelconque des revendications précédentes, dans laquelle le dispositif de commande (25) comprend des moyens d'établissement (57), les moyens d'établissement (57) étant raccordés au dispositif de commande (25) et permettant d'établir un nombre prédéterminé de paramètres de commande qui définissent des conditions de fonctionnement de la vanne, et dans laquelle les paramètres de commande comprennent au moins un paramètre choisi dans le groupe ayant :
un premier paramètre de commande relatif à un type de mouvement de l'élément de vérification,
un deuxième paramètre de commande relatif à une excursion maximale des valeurs du premier signal et du second signal ou de la valeur de la différence entre le premier signal et le second signal,
un troisième paramètre de commande relatif au type de fonction raccordant le signal de sortie et le premier signal et le second signal,
un quatrième paramètre de commande relatif à une vitesse de convergence entre la valeur réelle et la valeur de référence,
dans laquelle le deuxième paramètre de commande comprend des valeurs d'échelle basses de la jauge de pression différentielle (55), dans laquelle par rapport au troisième paramètre, la fonction comprend une liaison d'un type proportionnel ou intégral ou dérivatif, ou une combinaison de ceux-ci, et dans laquelle le quatrième paramètre de commande spécifie un temps de convergence défini en tant que temps transitoire pendant lequel la valeur du signal de différentiel de commande converge vers la valeur de référence,
et dans laquelle les moyens d'établissement (57) permettent une mémorisation d'un nombre prédéterminé de configurations relatives à des valeurs des paramètres de commande qui sont utiles pour gérer le dispositif de commande (25), facultativement dans laquelle les moyens d'établissement (57) comprennent des microrupteurs.

10. Vanne de régulation selon l'une quelconque des revendications précédentes, dans laquelle le dispositif de commande (25) comprend un moyen d'entrée (58), le moyen d'entrée (58) permettant d'établir au moins une valeur de référence, permettant facultativement d'établir une pression différentielle de référence entre la première section (22) et la seconde section (23), et
dans laquelle le dispositif de commande (25) comprend une mémoire et est configuré de façon à permettre une mémorisation d'une pluralité de valeurs de référence prédéterminées et permettre à un utilisateur de sélectionner au moins l'une des valeurs.

11. Vanne de régulation selon l'une quelconque des revendications 2 à 10 précédentes, dans laquelle l'élément de vérification (42) fonctionnant dans le canal (39) du corps de vanne (36) est configuré de façon à tourner selon un angle de mouvement par rapport à un axe de rotation (44) qui s'étend transversalement par rapport à un axe de développement prévalent (50) du canal (39), facultativement dans laquelle l'organe de vérification (42) présente une surface de rotation latérale ayant une conformation cylindrique ou sphérique ;
dans laquelle le rapport incrémentiel entre un pourcentage de variation de l'aire de l'ouverture de passage (43) et le pourcentage de déplacement de l'élément de vérification (42), sur la voie initiale comprenant entre 20 % et 30 % du chemin fonctionnel, tombe dans une plage entre 0 et 1,5, et/ou
dans laquelle le rapport incrémentiel entre un pourcentage de variation de l'aire de l'ouverture de passage (43) et le pourcentage de déplacement de l'élément de vérification (42), sur la voie finale comprenant entre 20 % et 30 % du chemin fonctionnel, tombe dans une plage entre 0 et 1,5.

12. Vanne de régulation selon l'une quelconque des revendications précédentes, dans laquelle l'ouverture de passage (43) comprend un façonnage frontal (51) présentant deux pièces sensiblement symétriques, chacune des pièces présentant une première partie (52) façonnée comme un arc de cercle, une seconde partie (53) façonnée comme un arc de cercle ayant un rayon plus petit que l'arc de la première partie (52), une inflexion de raccordement (53) qui raccorde la première partie (52) à la seconde partie (53), et/ou dans laquelle l'ouverture de passage (43) comprend un façonnage longitudinal (61) relatif à une section longitudinale par rapport à l'axe de développement prévalent (50) du canal (39), présentant une section progressivement croissante depuis l'admission (37) jusqu'au refoulement (38) du corps de vanne (36).
